# EUROPÄISCHE PATENTANMELDUNG

(11) **EP 2 034 125 A2**
(43) Veröffentlichungstag der Anmeldung: **11.03.2009**
(21) Anmeldenummer: 08012161.9
(22) Anmeldetag: 04.07.2008
(51) Int. Cl.: E06B 9/323

(54) **Befestigungsvorrichtung**

(30) Priorität: 31.07.2007 DE 202007010766 U; 19.02.2008 DE 202008002359 U
(71) Anmelder: Gerhard Geiger GmbH & Co., 74321 Bietigheim-Bissingen (DE)
(72) Erfinder: Dangel, Hans-Michael, 74 Erligheim (DE)
(74) Vertreter: Jeck, Anton

(57) **Zusammenfassung**

Die Erfindung betrifft eine Befestigungsvorrichtung für einen in einer U-förmigen Kastenschiene eingebauten Antrieb, insbesondere für Jalousienantriebe, bei der der Antrieb in der Kastenschiene mittels eines aus Flachmaterial bestehenden Bügels gehalten wird, der die offene Seite der Kastenschiene überbrückt und bei der die Bügelbasis starr ausgebildet ist und mit einer Druck auf den Antrieb ausübenden Klemmvorrichtung versehen ist. Die Klemmvorrichtung besteht aus einem am Bügel gelagerten Exzenterhebel oder einem Schwenkhebel und einem durch den Hebel betätigbaren Druckstück, mit dem der Antrieb festklemmbar ist. Alternativ kann die Klemmvorrichtung aus einem in einer runden Öffnung der Bügelbasis drehbar gelagerten Exzenterhebel bestehen, der aus einem Druckstück, das zentral zur Öffnung der Bügelbasis liegt und mit dem der Antrieb festklemmbar ist, und einem integrierten, eine Handhabe aufweisenden Hebelschaft besteht.

## Beschreibung

Die Erfindung betrifft eine Befestigungsvorrichtung gemäß dem Oberbegriff des Anspruchs 1.

Eine derartige Befestigungsvorrichtung ist in der DE 101 63 807 A1 beschrieben. Zur Anbringung des Bügels und Befestigung des Antriebs in der Kastenschiene muss ein Werkzeug, beispielsweise ein Schraubendreher oder ein Vierkantschlüssel, verwendet werden, um mittels der Klemmvorrichtung den nötigen Anpressdruck für den Rohrmotor in der Kastenschiene zu erzeugen.

Die Aufgabe der Erfindung besteht darin, eine Befestigungsvorrichtung der im Oberbegriff des Anspruchs 1 genannten Art zu schaffen, die leicht zu montieren bzw. demontieren ist, aber auch eine starke Niederhaltekraft für den Antrieb erzeugt und die eine Befestigung des Antriebs in der Kastenschiene ohne Verwendung eines Werkzeugs erlaubt.

Diese Aufgabe wird mit den Merkmalen des Anspruchs 1 gelöst.

Damit kann der Antrieb in der Kastenschiene in deren Längsrichtung verschoben und dann an einem gewünschten Ort verriegelt werden, vorzugsweise auch zum Kuppeln mit bzw. Entkuppeln von einer Antriebswelle. Die Montage der Befestigungsvorrichtung erfolgt einfach dadurch, dass der Bügel auf die Kastenschiene aufgesteckt oder in die mit umgebogenen Rändern versehene Kastenschiene eingesteckt und die Klemmvorrichtung mittels des Exzenterhebels betätigt wird. Dadurch ist der Antrieb gegen eine radiale Verdrehung und axiale Verschiebung gesichert.

Eine weitere, zweckmäßige Ausbildung der Erfindung sieht vor, dass der Bügel auf seiner Basis zwei mit jeweils einer Bohrung versehene Bügellaschen und eine Öffnung zwischen den Bügellaschen aufweist und dass der Exzenterhebel in den Bohrungen der Bügellaschen mittels eines Stifts gelagert ist.

Eine weitere, zweckmäßige Ausbildung der Erfindung sieht vor, dass das Druckstück einen Flachkörper aufweist, dessen horizontaler Umfang größer als der Umfang der Öffnung der Bügelbasis ist und dessen untere Fläche an die Geometrie des Antriebs angepasst ist, dass auf dem Körper zwei mit jeweils einem vertikalen Langloch versehene Druckstücklaschen angeordnet sind, die einen derartigen Abstand voneinander aufweisen, dass sie zwischen die Bügellaschen passen, und dass das Druckstück von unten in die Öffnung der Bügelbasis eingesetzt und der Stift durch die Langlöcher geführt ist.

Gemäß einer weiteren Ausbildung der Erfindung ist der Antrieb in einer sich in der Kastenschiene abstützenden und an seine Rundung angepasste Wanne aufgenommen. Dadurch kann die Verdrehsicherheit des Antriebs in der Kastenschiene erhöht werden. Um die radiale Verdrehsicherheit des Antriebs weiter zu erhöhen, kann der Antrieb außen im Bereich des Bügels und/oder die untere Fläche des Druckstücks und/oder die Innenfläche der Wanne mit einer Rändelung versehen sein.

Eine weitere Ausbildung der Erfindung sieht vor, dass der Bügel U-förmig ausgebildet ist, die Kastenschiene umgreift und mittels Krallen am Kastenschienenboden gehalten wird. Dies ist eine der Ausbildungsmöglichkeiten des Bügels, die bereits durch die genannte DE 101 63 807 bekannt ist.

Eine weitere Ausbildungsmöglichkeit des Bügels besteht gemäß der Erfindung darin, dass die Ränder der Längswände der Kastenschiene U-förmig nach innen gebogen sind und dass der Bügel an seinen Enden Winkelstücke aufweist, die unter die Ränder einhakbar sind. Dadurch ist der Bügel einfacher gestaltet, und die Montage der Kastenschiene wird nicht behindert.

Gemäß einer weiteren Ausbildung der Erfindung ist die Bügelbasis mit in Bügellängsrichtung verlaufenden Verstärkungsrippen versehen, so dass die Durchbiegungsmöglichkeit der Bügelbasis vermindert wird.

Eine weitere, vorteilhafte Ausbildung der Erfindung sieht vor, dass die Wanne in die U-förmigen Ränder eingreift und sich dort abstützt. Gleichzeitig kann der Wannenrand durch den Bügel an den Kastenschienenwänden festgelegt werden.

Mittels der Alternativlösung gemäß der Erfindung kann der Antrieb in der Kastenschiene in deren Längsrichtung und Radialrichtung verschoben und dann an einem gewünschten Ort verriegelt werden, vorzugsweise auch zum Kuppeln mit bzw. Entkuppeln von einer Antriebswelle. Die Montage der Befestigungsvorrichtung erfolgt einfach dadurch, dass der Bügel auf die Kastenschiene aufgesteckt und der die Klemmvorrichtung bildende Exzenterhebel betätigt wird. Dadurch ist der Antrieb gegen eine radiale Verdrehung und axiale Verschiebung gesichert.

Eine weitere, zweckmäßige Ausbildung der Alternativform gemäß der Erfindung sieht vor, dass das Druckstück durch einen Flachkörper gebildet ist, dessen horizontaler Umfang größer als der Umfang der Öffnung der Bügelbasis ist und dessen untere Seite eine an die Rundung des Antriebs angepasste Wölbung aufweist, dass auf der Oberseite des Flachkörpers ein zentraler, kreisrunder Führungsaufsatz zur Führung des Exzenterhebels in der Öffnung der Bügelbasis vorgesehen ist, wobei der Führungsaufsatz an seinem Umfang zwei gegenüberliegende Ausnehmungen aufweist, und dass in diesen Ausnehmungen jeweils eine Rastfeder zur Rastung des Exzenterhebels hinter den Rand der Öffnung der Bügelbasis angeordnet ist. Dadurch kann der Exzenterhebel in einfacher Weise von unten in den Bügel eingeklippst werden.

Gemäß einer weiteren Ausbildung der Alternativform gemäß der Erfindung sind die Wölbung und der Hebelschaft derart aufeinander abgestimmt, dass in der einen Endstellung des Hebelschafts, die der Stellung in der Nähe der einen seitlichen Kastenwand entspricht, eine Entriegelung und in der anderen Endstellung des Hebelschafts, die der Stellung in der Nähe der anderen seitlichen Kastenwand entspricht, eine Verriegelung des Antriebs stattfindet.

Gemäß einer weiteren Ausbildung der Alternativform gemäß der Erfindung ist die Entriegelungsstellung des Hebelschafts durch am Umfang des Druckstücks gegenüberliegend angebrachte Raststücke definiert, die mit an der Bügelbasis angebrachten Rastöffnungen zusammenwirken.

Gemäß einer weiteren, zweckmäßigen Ausbildung der Alternativform gemäß der Erfindung ist der Führungsaufsatz mit einer Vierkantöffnung zur Aufnahme eines Vierkantschlüssels und/oder mit einem Schlitz zur Aufnahme eines Schraubendrehers versehen. Dadurch sind alternative Betätigungsmöglichkeiten für den Exzenterhebel geschaffen.

Gemäß einer weiteren, zweckmäßigen Ausbildung der Alternativform gemäß der Erfindung ist der Antrieb in einer sich mittels Stützen an der Kastenschiene abstützenden, runden und an seine Rundung angepassten Wanne aufgenommen. Dadurch kann die Verdrehsicherheit des Antriebs in der Kastenschiene erhöht werden. Um die radiale Verdrehsicherheit des Antriebs weiter zu erhöhen, kann der Antrieb außen im Bereich des Bügels und/oder die untere Fläche des Druckstücks und/oder die Innenfläche der Wanne mit einer Rändelung versehen sein.

Gemäß einer weiteren, zweckmäßigen Ausbildung der Alternativform gemäß der Erfindung ist vorgesehen, dass der Bügel U-förmig ausgebildet ist, die Kastenschiene umgreift und mittels Krallen am Kastenschienenboden gehalten wird.

Eine weitere, zweckmäßige Ausbildung der Alternativform gemäß der Erfindung sieht vor, dass die Stützen mit Endstücken versehen sind, die auf den seitlichen Kastenwänden aufliegen und jeweils einen Fixieraufsatz aufweisen, und dass die Bügelbasis an ihren Enden mit jeweils einer Ausnehmung versehen ist, in die der zugehörige Fixieraufsatz formschlüssig aufnehmbar ist.

Gemäß einer weiteren, zweckmäßigen Ausbildung der Alternativform gemäß der Erfindung ist der Bügel mit in Bügellängsrichtung verlaufenden Verstärkungsrippen und/oder mit Verstärkungssicken versehen. Dadurch kann die Durchbiegungsmöglichkeit des Bügels vermindert werden.

Die Erfindung wird nun anhand von Ausführungsbeispielen näher erläutert. Es zeigen:
- Fig. 1: eine perspektivische Ansicht einer Kastenschiene, einer Wanne und eines darin eingebauten Antriebs sowie der Befestigungsvorrichtung gemäß der Erfindung für diesen Antrieb,
- Fig. 2: eine Stirnansicht der Anordnung der Fig. 1 mit offener Befestigungsvorrichtung,
- Fig. 3: eine Stirnansicht der Anordnung der Fig. 1 mit geschlossener Befestigungsvorrichtung,
- Fig. 4: eine Stirnansicht der Anordnung der Fig. 1 mit offener und geschnittener Befestigungsvorrichtung,
- Fig. 5: eine Stirnansicht der Anordnung der Fig. 1 mit geschlossener und geschnittener Befestigungsvorrichtung,
- Fig. 6: eine perspektivische Ansicht der Wanne nach Fig. 1,
- Fig. 7: eine Seitenansicht des Bügels der Befestigungsvorrichtung nach Fig. 1,
- Fig. 8: eine Stirnansicht des Bügels der Fig. 7,
- Fig. 9: eine Draufsicht auf den Bügel der Fig. 7,
- Fig. 10: eine perspektivische Ansicht des Bügels der Fig. 7,
- Fig. 11: eine Seitenansicht des Druckstücks der Fig. 1,
- Fig. 12: eine Stirnansicht des Druckstücks der Fig. 11,
- Fig. 13: eine Draufsicht auf das Druckstück der Fig. 11,
- Fig. 14: eine perspektivische Ansicht des Druckstücks der Fig. 11,
- Fig. 15: eine Draufsicht auf eine weitere Ausführung einer Befestigungsvorrichtung, eine Kastenschiene und einen Antrieb, wobei ein Drehklemmhebel im geöffneten (geschlossenen) Zustand der Befestigungsvorrichtung dargestellt ist,
- Fig. 16: eine Draufsicht auf die Anordnung der Fig. 15, wobei der Drehklemmhebel im geschlossenen (geöffneten) Zustand der Befestigungsvorrichtung dargestellt ist,
- Fig. 17: eine perspektivische Ansicht einer Kastenschiene, einer Wanne und eines darin eingebauten Antriebs sowie einer alternativen Befestigungsvorrichtung gemäß der Erfindung für diesen Antrieb mit einem Befestigungsbügel,
- Fig. 18: eine Draufsicht auf die montierten Elemente der Fig. 17, wobei die Befestigungsvorrichtung entriegelt ist,
- Fig. 19: eine Draufsicht auf die montierten Elemente der Fig. 17, wobei die Befestigungsvorrichtung verriegelt ist,
- Fig. 20: eine Stirnansicht der Anordnung der Fig. 19 in Richtung des Pfeils A in Fig. 19,
- Fig. 21: eine perspektivische Ansicht des Befestigungsbügels der Fig. 17 von schräg unten, wobei der Exzenterhebel die Entriegelungsstellung einnimmt,
- Fig. 22: eine perspektivische Ansicht des Befestigungsbügels der Fig. 17 von schräg unten, wobei der Exzenterhebel die Verriegelungsstellung einnimmt,
- Fig. 23: eine Seitenansicht des Exzenterhebels der Fig. 21,
- Fig. 24: einen Schnitt durch den Exzenterhebel längs der Linie B-B in Fig. 23,
- Fig. 25: eine perspektivische Ansicht des Exzenterhebels der Fig. 23 und
- Fig. 26: eine Draufsicht auf den Exzenterhebel der Fig. 23.

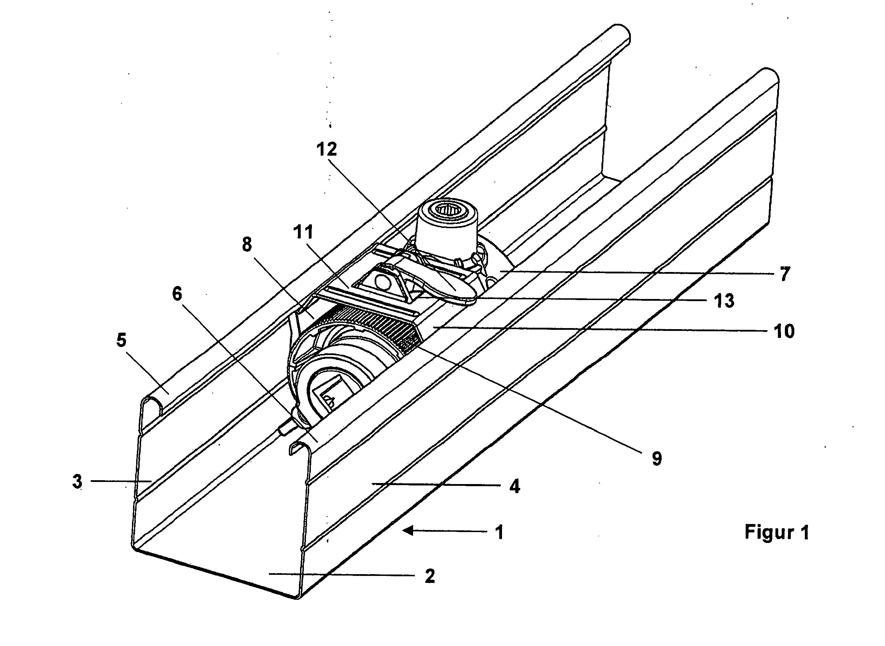

In Fig. 1 ist eine U-förmige Kastenschiene 1 aus einer Basis 2 und daran anschließenden Schenkeln 3, 4 dargestellt, die U-förmig nach innen abgebogene Ränder 5, 6 aufweisen. In die Kastenschiene 1 ist ein Antrieb 7 eingebaut, der in einer Wanne 8 aufgenommen und mit einer Rändelung 9 versehen ist.

Zur Befestigung des Antriebs 7 in der Wanne 8 bzw. der Kastenschiene 1 dient eine Befestigungsvorrichtung 10. Diese besteht aus einem Bügel 11 aus Flachmaterial, der derart angebracht ist, dass er die Kastenschiene 1 auf deren offenen Seite überbrückt. Ferner umfasst die Befestigungsvorrichtung 10 einen auf dem Bügel 11 drehbar gelagerten Exzenterhebel 12 und ein Druckstück 13, das mittels des Exzenterhebels auf den Antrieb 7 pressbar ist.

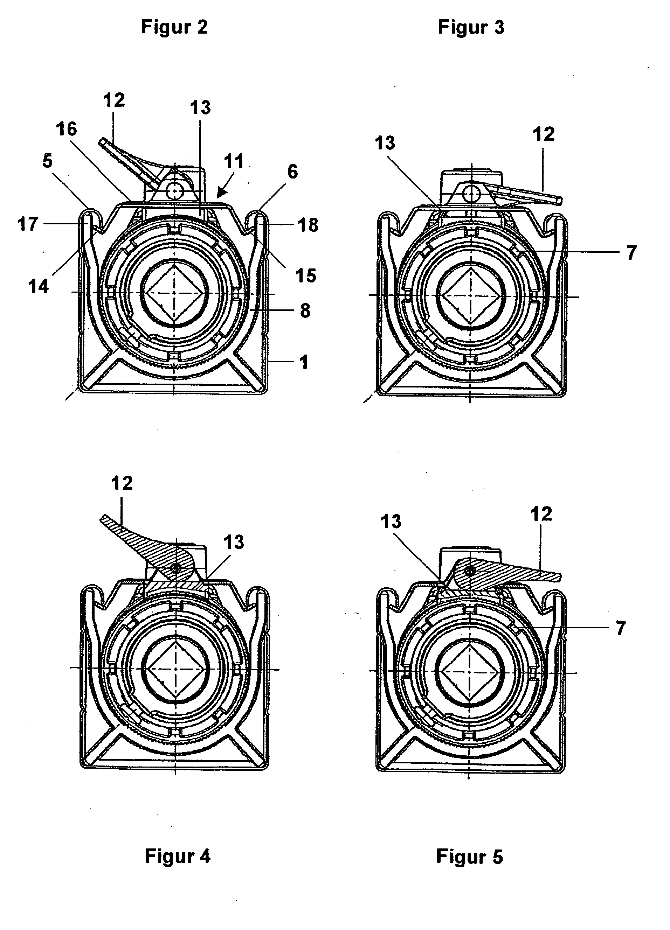

In den Figuren 2 bis 5 sind Stirnansichten der Anordnung nach Fig. 1 dargestellt, aus denen die Funktionsweise der Befestigungsvorrichtung 10 näher hervorgeht. Wie die Fig. 2 zeigt, sind die Enden des Bügels 11 mit Winkelstücken 14, 15 versehen, die von einer Bügelbasis 16 abgebogen und unter die Ränder 5, 6 einhakbar sind. Durch diese Winkelstücke sind auch die Wannenränder 17, 18, die in die Ränder 5, 6 eingreifen und sich dort abstützen, an den Seitenwänden der Kastenschiene 1 festlegbar. In den Figuren 2 und 4 ist der Exzenterhebel 12 derart umgelegt, dass er das Druckstück 13 freigibt und damit die Befestigungsvorrichtung geöffnet ist. In den Figuren 3 und 5 ist der Exzenterhebel 12 derart zur anderen Seite umgelegt, dass er das Druckstück 13 auf den Antrieb 7 presst und damit die Befestigungsvorrichtung geschlossen ist.

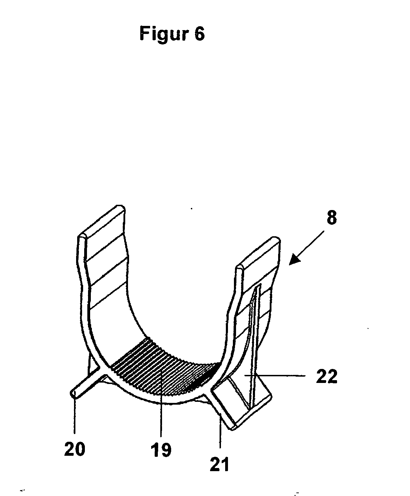

Die Fig. 6 zeigt die Wanne 8 genauer. Sie ist am Wanneninnenboden mit einer Rändelung 19, außen mit Stützfüßen 20, 21 und am Umfang mit Versteifungsrippen, wie der Rippe 22, versehen.

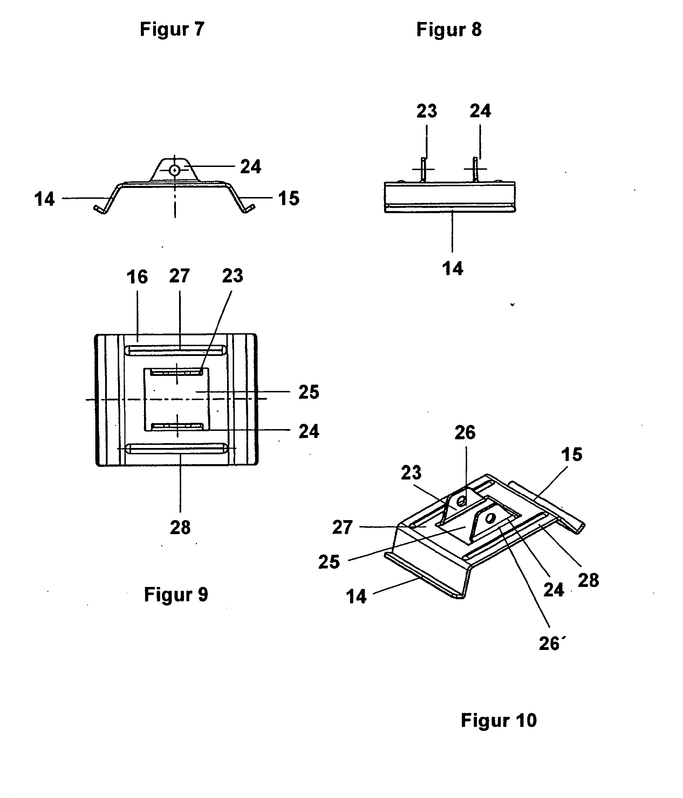

In den Figuren 7 bis 10 ist der Bügel 11 näher dargestellt, der als Stanz- und Biegeteil hergestellt ist, aber auch aus Kunststoff hergestellt werden kann. In der Mitte sind zwei Bügellaschen 23, 24 ausgestanzt und um einen Winkel von 90° nach oben gebogen. Jede Bügellasche ist mit einer Bohrung 26 bzw. 26' versehen, durch die ein Stift zum Halten des Exzenterhebels führbar ist. Beim Stanzen wird auch eine zwischen diesen Bügellaschen angeordnete, viereckige Öffnung 25 geschaffen, durch die von unten das Druckstück einführbar ist. Ferner ist die Bügelbasis 16 mit zwei in Bügellängsrichtung verlaufenden Verstärkungsrippen 27, 28 versehen.

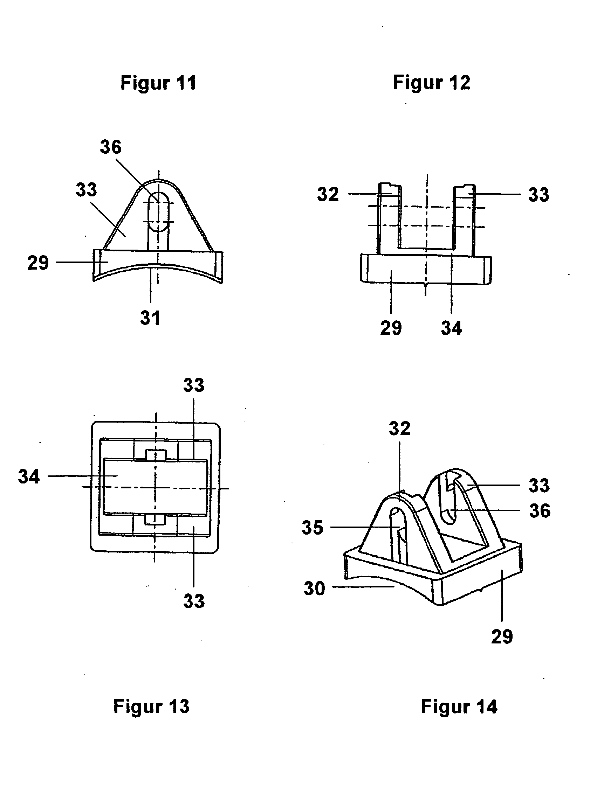

In den Figuren 11 bis 14 ist das Druckstück 13 näher dargestellt. Das Druckstück 13 besteht aus einem viereckigen Flachkörper 29, dessen Grundfläche größer als die Öffnung 25 des Bügels ist und der auf seine Unterseite mit einer an die Rundung des Antriebs angepassten Fläche 30 versehen ist. Diese Fläche kann eine Rändelung 31 tragen. Auf dem Flachkörper 29 ragen zwei Druckstücklaschen 32, 33 in einem solchen Abstand nebeneinander einstückig heraus, dass sie zwischen die Bügellaschen 23, 24 passen, wobei zwischen diesen Laschen noch ein Verstärkungsboden 34 vorgesehen ist. Jede Druckstücklasche 32, 33 ist mit einem vertikalen Langloch 35 bzw. 36 versehen, durch die bei der Montage der Befestigungsvorrichtung der genannte Stift führbar ist. Das Druckstück 13 lässt sich vertikal zwischen den Bügellaschen verschieben und wird dabei in den Langlöchern 35, 36 geführt.

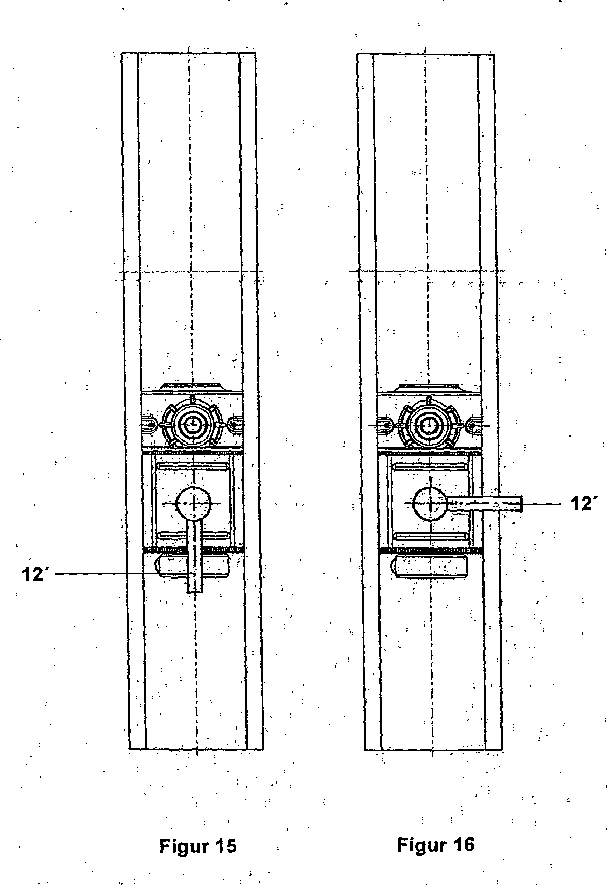

Die Figuren 15, 16 zeigen eine weitere Ausführung einer Befestigungsvorrichtung gemäß der Erfindung, die sich von der ersten Ausführung dadurch unterscheidet, dass kein Exzenterhebel, sondern ein Schwenkhebel 12' verwendet wird, der beim Verschwenken beispielsweise in einem Gewinde geführt wird und dabei das Druckstück entweder freigibt oder auf den Antrieb drückt.

Die Kastenschiene 1 kann in einfacher Weise mit Montagebügeln an einer nicht dargestellten Wand montiert werden.

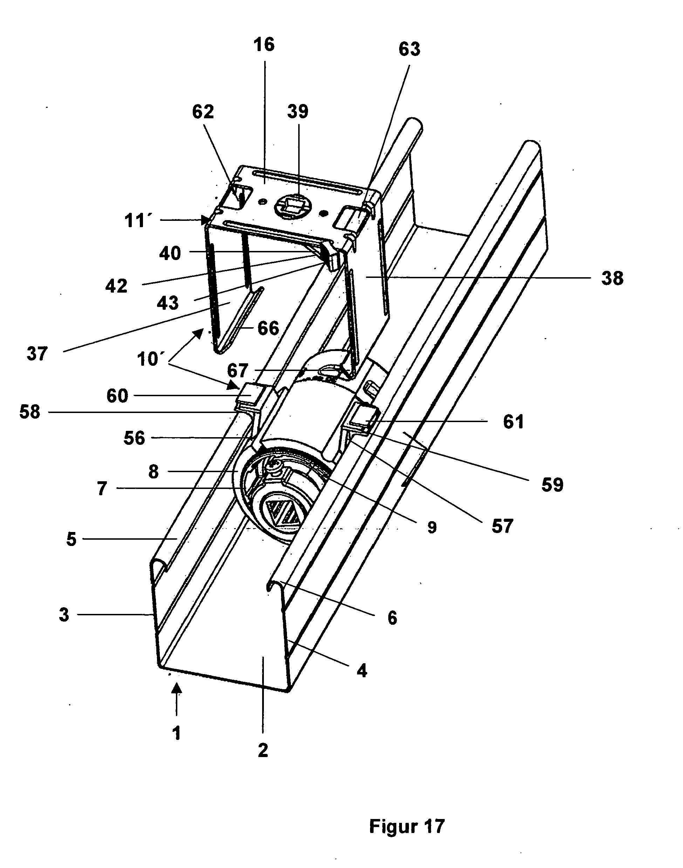

Eine alternative Lösung gemäß der Erfindung ist in den Figuren 17 bis 26 dargestellt.

In Fig. 17 ist eine U-förmige Kastenschiene 1 aus einer Basis 2 und daran anschließenden Schenkeln 3, 4 dargestellt, die U-förmig nach innen abgebogene Ränder 5, 6 aufweisen. In die Kastenschiene 1 ist ein runder, langgestreckter Antrieb 7 eingebaut, der in einer Wanne 8 aufgenommen und mit einer Rändelung 9 versehen ist.

Zur Befestigung des Antriebs 7 in der Wanne 8 bzw. der Kastenschiene 1 dient eine Befestigungsvorrichtung 10'. Diese besteht aus einem Befestigungsbügel (Bügel) 11' aus Flachmaterial, der aus einer Bügelbasis 16' und zwei daran rechtwinklig angesetzten Bügelschenkeln 37, 38 besteht und der derart angebracht ist, dass er die Kastenschiene 1 auf deren offenen Seite überbrückt. Der Bügel 11' weist einen in einer kreisrunden Öffnung 39 der Bügelbasis 16' drehbar gelagerten Exzenterhebel 40 aus einem Druckstück 41 und einem Hebelschaft 42 auf, der an seinem freien Ende mit einer Handhabe 43 versehen ist. Das Druckstück 41 ist als kreisrunder Flachkörper ausgebildet, weist einen größeren Durchmesser als die Öffnung 39 auf und liegt zentral zu dieser Öffnung.

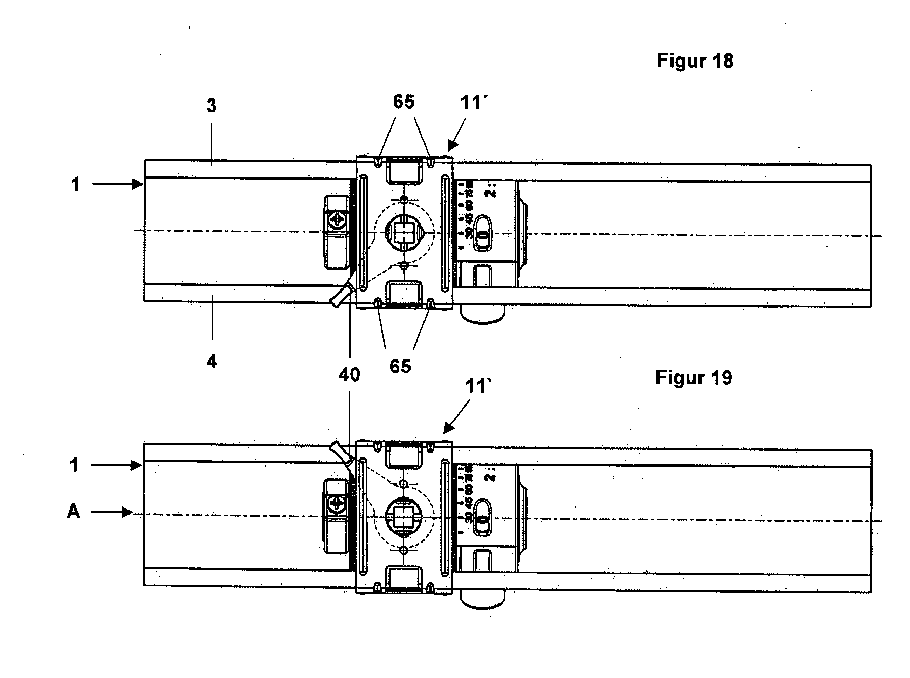

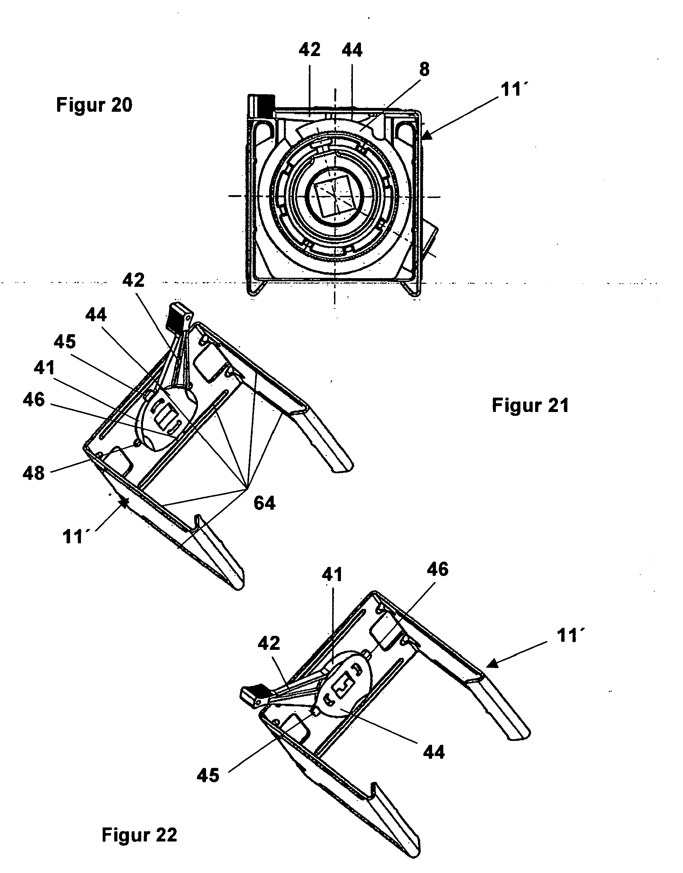

Dieses Druckstück 41 weist auf seiner Unterseite eine Wölbung 44 auf (Figuren 21, 22), die an die Rundung des Antriebs 7 bzw. der Wanne 8 angepasst ist, wobei diese Wölbung und der Hebelschaft 42 derart aufeinander abgestimmt sind, dass in der einen Endstellung des Hebelschafts, die der Stellung in der Nähe der einen seitlichen Kastenwand 4 entspricht, eine Entriegelung und in der anderen Endstellung des Hebelschafts, die der Stellung in der Nähe der anderen seitlichen Kastenwand 3 entspricht, eine Verriegelung des Antriebs 7 stattfindet. Dies ist in den Figuren 18-20 dargestellt. Dabei ist die Entriegelungsstellung des Hebelschafts 42 durch am Umfang des Druckstücks 41 gegenüberliegend angebrachten Raststücken 45, 46 definiert, die mit an der Bügelbasis angebrachten Rastöffnungen 48, 49 zusammenwirken (Figuren 21, 22).

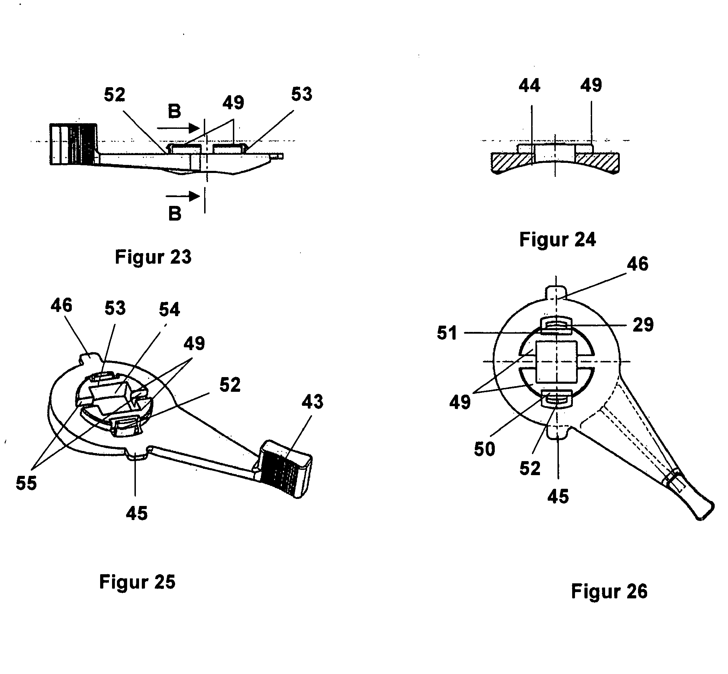

Das Druckstück 41 weist gemäß den Figuren 23-26 auf seiner Oberseite einen zentralen, kreisrunden Führungsaufsatz 49 zur Führung des Exzenterhebels in der Öffnung 39 der Bügelbasis auf, wobei der Führungsaufsatz 49 an seinem Umfang zwei gegenüberliegende Ausnehmungen 50, 51 aufweist: In diesen Ausnehmungen ist jeweils eine Rastfeder 52 bzw. 53 zur Rastung des Exzenterhebels 40 hinter den Rand der Öffnung 39 der Bügelbasis angeordnet. Der Führungsaufsatz 49 ist mit einer Vierkantöffnung 54 zur Aufnahme eines Vierkantschlüssels und/oder mit einem Schlitz 55 zur Aufnahme eines Schraubendrehers versehen. Daher kann das Druckstück 41 statt mit dem Hebelschaft 42 alternativ auch mit dem Vierkantschlüssel oder mit dem Schraubendreher betätigt werden.

Zur Befestigungsvorrichtung gehören gemäß Fig. 17 auch Stützen 56, 57 in Form von Winkelstücken, die an der Wanne 8 angebracht und mit Endstücken 58, 59 versehen sind, die auf den seitlichen Kastenwänden 3, 4 aufliegen und jeweils einen Fixieraufsatz 60, 61 aufweisen. Die Bügelbasis 16' weist an ihren Enden jeweils eine Ausnehmung 62, 63 auf, in die der zugehörige Fixieraufsatz 60 bzw. 61 formschlüssig aufnehmbar ist.

Der U-förmige Bügel 11' ist noch mit in Bügellängsrichtung verlaufenden Verstärkungsrippen 64 (Fig. 21) und mit Verstärkungssicken 65 (Fig. 18) versehen. Er umgreift die Kastenschiene 1 und wird mittels Krallen 66, 67 am Kastenschienenboden 2 gehalten.

Die Kastenschiene 1 kann in einfacher Weise mit Montagebügeln an einer nicht dargestellten Wand montiert werden.

## Patentansprüche

1. Befestigungsvorrichtung für einen in einer U-förmigen Kastenschiene (1) eingebauten Antrieb (7), insbesondere für Jalousien, bei der der Antrieb (7) in der Kastenschiene (1) mittels eines aus Flachmaterial bestehenden Bügels (11, 11') gehalten wird, der die offene Seite der Kastenschiene (1) überbrückt und bei der die Bügelbasis (16, 16') starr ausgebildet ist und mit einer Druck auf den Antrieb (7) ausübenden Klemmvorrichtung (10, 10') versehen ist,
**dadurch gekennzeichnet,**
**dass** die Klemmvorrichtung (10) aus einem am Bügel (11) gelagerten Exzenterhebel (12) oder Schwenkhebel (12') und einem durch den Hebel betätigbaren Druckstück (13) besteht, mit dem der Antrieb festklemmbar ist, oder
**dass** die Klemmvorrichtung (10') aus einem in einer runden Öffnung (39) der Bügelbasis (16') drehbar gelagerten Exzenterhebel (40) besteht, der aus einem Druckstück (41), das zentral zur Öffnung (39) der Bügelbasis liegt und mit dem der Antrieb (7) festklemmbar ist, und einem integrierten, eine Handhabe (43) aufweisenden Hebelschaft (42) besteht.

2. Befestigungsvorrichtung nach Anspruch 1 mit einem Exzenterhebel,
**dadurch gekennzeichnet,**
**dass** der Bügel (11) auf seiner Basis (16) zwei mit jeweils einer Bohrung (26, 26') versehene Bügellaschen (23, 24) und eine Öffnung (25) zwischen den Bügellaschen aufweist und dass der Exzenterhebel (12) in den Bohrungen (26, 26') der Bügellaschen (23, 24) mittels eines Stifts gelagert ist.

3. Befestigungsvorrichtung nach Anspruch 2,
**dadurch gekennzeichnet,**
**dass** das Druckstück (13) einen Flachkörper (29) aufweist, dessen horizontaler Umfang größer als der Umfang der Öffnung (25) der Bügelbasis ist und dessen untere Fläche (30) an die Geometrie des Antriebs (7) angepasst ist, dass auf dem Körper zwei mit jeweils einem vertikalen Langloch (35, 36) versehene Druckstücklaschen (32, 33) angeordnet sind, die einen derartigen Abstand voneinander aufweisen, dass sie zwischen die Bügellaschen (23, 24) passen, und dass das Druckstück (13) von unten in die Öffnung (25) der Bügelbasis eingesetzt und der Stift durch die Langlöcher (35, 36) geführt ist.

4. Befestigungsvorrichtung nach einem der Ansprüche 1 bis 3,
**dadurch gekennzeichnet,**
**dass** der Antrieb (7) in einer sich in der Kastenschiene (1) abstützenden und an seine angepasste Wanne (8) aufgenommen ist.

5. Befestigungsvorrichtung nach einem der Ansprüche 1 bis 4,
**dadurch gekennzeichnet,**
**dass** der Bügel U-förmig ausgebildet ist, die Kastenschiene umgreift und mittels Krallen am Kastenschienenboden gehalten wird.

6. Befestigungsvorrichtung nach einem der Ansprüche 1 bis 4,
**dadurch gekennzeichnet,**
**dass** die Ränder (5, 6) der Längswände (3, 4) der Kastenschiene (1) U-förmig nach innen gebogen sind und dass der Bügel (11) an seinen Enden Winkelstücke (14, 15) aufweist, die unter die Ränder (5, 6) einhakbar sind.

7. Befestigungsvorrichtung nach Anspruch 5 oder 6,
**dadurch gekennzeichnet,**
**dass** die Bügelbasis (16) mit in Bügellängsrichtung verlaufenden Verstärkungsrippen (27, 28) versehen ist.

8. Befestigungsvorrichtung nach den Ansprüchen 4 und 6,
**dadurch gekennzeichnet,**
**dass** die Wanne (8) in die U-förmigen Ränder (5, 6) eingreift und sich dort abstützt.

9. Befestigungsvorrichtung nach Anspruch 1,
**dadurch gekennzeichnet,**
**dass** das Druckstück (41) durch einen Flachkörper gebildet ist, dessen horizontaler Umfang größer als der Umfang der Öffnung (39) der Bügelbasis ist und dessen untere Seite eine an die Rundung des Antriebs (7) angepasste Wölbung (44) aufweist, dass auf der Oberseite des Flachkörpers ein zentraler, kreisrunder Führungsaufsatz (49) zur Führung des Exzenterhebels in der Öffnung (39) der Bügelbasis vorgesehen ist, wobei der Führungsaufsatz (49) an seinem Umfang zwei gegenüberliegende Ausnehmungen (50, 51) aufweist, und dass in diesen Ausnehmungen jeweils eine Rastfeder (52, 53) zur Rastung des Exzenterhebels hinter den Rand der Öffnung (39) der Bügelbasis angeordnet ist.

10. Befestigungsvorrichtung nach Anspruch 1 oder 9,
**dadurch gekennzeichnet,**
**dass** die Wölbung (44) und der Hebelschaft (42) derart aufeinander abgestimmt sind, dass in der einen Endstellung des Hebelschafts, die der Stellung in der Nähe der einen seitlichen Kastenwand (4) entspricht, eine Entriegelung und in der anderen Endstellung des Hebelschafts, die der Stellung in der Nähe der anderen seitlichen Kastenwand (3) entspricht, eine Verriegelung des Antriebs (7) stattfindet.

11. Befestigungsvorrichtung nach Anspruch 10,
**dadurch gekennzeichnet,**
**dass** die Entriegelungsstellung des Hebelschafts (42) durch am Umfang des Druckstücks (41) gegenüberliegend angebrachte Raststücke (45, 46) definiert ist, die mit an der Bügelbasis angebrachten Rastöffnungen (48, 49) zusammenwirken.

12. Befestigungsvorrichtung nach einem der Ansprüche 1, 9 bis 11,
**dadurch gekennzeichnet,**
**dass** der Führungsaufsatz (49) mit einer Vierkantöffnung (54) zur Aufnahme eines Vierkantschlüssels und/oder mit einem Schlitz (55) zur Aufnahme eines Schraubendrehers versehen ist.

13. Befestigungsvorrichtung nach einem der Ansprüche 1, 9 bis 12,
**dadurch gekennzeichnet,**
**dass** der Antrieb (7) in einer sich mittels Stützen (56, 57) an der Kastenschiene (1) abstützenden, runden und an seine Rundung angepassten Wanne (8) aufgenommen ist.

14. Befestigungsvorrichtung nach einem der Ansprüche 1, 9 bis 13,
**dadurch gekennzeichnet,**
**dass** der Bügel U-förmig ausgebildet ist, die Kastenschiene (1) umgreift und mittels Krallen (66, 67) am Kastenschienenboden (2) gehalten wird.

15. Befestigungsvorrichtung nach den Ansprüchen 13 und 14,
**dadurch gekennzeichnet,**
**dass** die Stützen (56, 57) mit Endstücken (58, 59) versehen sind, die auf den seitlichen Kastenwänden aufliegen und jeweils einen Fixieraufsatz (60, 61) aufweisen, und dass die Bügelbasis (16') an ihren Enden mit jeweils einer Ausnehmung (62, 63) versehen ist, in die der zugehörige Fixieraufsatz (60, 61) formschlüssig aufnehmbar ist.

16. Befestigungsvorrichtung nach Anspruch 14 oder 15,
**dadurch gekennzeichnet,**
**dass** der Bügel (11') mit in Bügellängsrichtung verlaufenden Verstärkungsrippen (64) und/oder mit Verstärkungssicken (65) versehen ist.
